# EUROPÄISCHE PATENTSCHRIFT

(11) **EP 4 136 276 B1**
(45) Veröffentlichungstag und Bekanntmachung des Hinweises auf die Patenterteilung: **20.09.2023**
(21) Anmeldenummer: 21729259.8
(22) Anmeldetag: 25.05.2021
(51) Int. Cl.: C25B 1/04, C25B 1/26, C25B 9/75, C25B 9/77, C25B 15/08

(54) **ELEKTROLYSEZELLE, VERFAHREN ZUM BETRIEB EINER SOLCHEN ZELLE UND ELEKTROLYSEUR**
ELECTROLYTIC CELL, METHOD FOR OPERATING A CELL OF THIS TYPE AND ELECTROLYSER
CELLULE ÉLECTROLYTIQUE, PROCÉDÉ DE FONCTIONNEMENT D'UNE CELLULE DUDIT TYPE ET ÉLECTROLYSEUR

(30) Priorität: 26.05.2020 DE 102020206576
(43) Veröffentlichungstag der Anmeldung: 22.02.2023
(73) Patentinhaber: thyssenkrupp nucera AG & Co. KGaA, 44141 Dortmund (DE)
(72) Erfinder: BÜRKIN, Cornelia, 44137 Dortmund (DE); TOROS, Peter, 45326 Essen (DE); POLCYN, Gregor Damian, 44225 Dortmund (DE); AUSTENFELD, Sebastian, 59494 Soest (DE); KLINK, Stefan, 44789 Bochum (DE); BRINKMANN, Jonas, 44803 Bochum (DE)
(74) Vertreter: thyssenkrupp Intellectual Property GmbH
(86) Internationale Anmeldenummer: PCT/EP2021/063781
(87) Internationale Veröffentlichungsnummer: WO 2021/239674

(56) Entgegenhaltungen:
- US-A1- 2012 234 676
- US-A1- 2018 274 110

## Beschreibung

Die Erfindung betrifft eine Elektrolysezelle, umfassend eine Kathodenhalbzelle mit einer Kathode, eine Anodenhalbzelle mit einer Anode, und einen die beiden Halbzellen voneinander trennenden Separator, der für einen im Betriebszustand in den Halbzellen befindlichen Elektrolyten permeabel ausgebildet ist. Die Erfindung betrifft zudem ein Verfahren zum Betrieb einer solchen Elektrolysezelle sowie einen Elektrolyseur, der eine Vielzahl solcher Elektrolysezellen umfasst.

Klassischerweise verfügen Elektrolyseure über einen Anolyt- beziehungsweise Katholytkreislauf, wobei jede Halbzelle über einen Elektrolyteinlass sowie einen Elektrolytauslass verfügt. Solche - beispielsweise aus US 4,285,795 vorbekannte - Konfigurationen gehen mit einem erheblichen Aufwand hinsichtlich der Bereitstellung von Rohrleitungen, Vorratsbehältern, Pumpen und Instrumenten einher.

Zudem fließen zwischen elektrisch in Reihe geschalteten Elektrolysezellen, die über gegenseitige Elektrolytein- bzw. Auslässe miteinander verbunden sind, unerwünschte Streuströme über den Elektrolyten. Durch solche Streuströme werden nicht nur unerwünschte Sekundärreaktionen hervorgerufen, sondern gehen die Streuströme insbesondere mit einer Absenkung der Effizienz der Elektrolyse einher. Ferner ist bekannt, dass Streuströme zu einer unerwünschten Korrosion und damit Verringerung der Lebensdauer der Elektrolysezellen beitragen.

Eine Verringerung von Streuströmen kann herbeigeführt werden, indem die Querschnitte der Ein- und Auslässe der Elektrolyten verringert werden, wobei dieser Ansatz aus Gründen der Notwendigkeit der Erreichung eines Mindest-Elektrolytvolumenstroms nur begrenzt verfolgt werden kann. Alternativ ist bekannt, zur Verringerung der Streuströme die Länge der Ein- und Auslässe der Elektrolyten zu erhöhen. Zwar geht dies mit dem Vorteil der Vergrößerung des elektrischen Widerstands und somit der Verringerung der Streuströme aber auch mit einer Erhöhung des Platzbedarfs sowie der Kosten einher.

US 2018/0274110 A1 beschreibt eine Wasser-Elektrolysezelle mit einer Polymer-Elektrolyt-Membran (PEM). Die Membran ist aufgebaut aus einer kohlenwasserstoffbasierten Elektrolytmembran, die mit einer Verbundmembran laminiert ist, welche einen auf einer Perfluorsulfonsäure basierenden Elektrolyten und ein Metalloxid einer superstarken Säure umfasst. Die Membran bildet einen Festkörperelektrolyt mit einer verbesserten Protonenleitfähigkeit bei zugleich geringer Gasdurchlässigkeit und hoher mechanischer Festigkeit.

Aus US 2012/0234676 A1 ist eine Chlor-Alkali-Elektrolysezelle mit einem durchlässigen Diaphragma als Separator zwischen den Kammern bekannt. Der Anodenkammer wird Sole zugeführt, welche durch die Poren des Diaphragmas fließt und die Kathodenkammer füllt. Im stationären Zustand stellt sich daher in der Anodenkammer ein im Vergleich zur Kathodenkammer höherer Solespiegel ein. Da mehr Sole zugeführt wird als für die Chlorproduktion benötigt, fließt ein Teil davon durch das Diaphragma in die Kathodenkammer und wird daraus vermischt mit Natronlauge abgeführt.

Ausgehend von dem vorbeschriebenen Stand der Technik liegt der Erfindung daher die Aufgabe zugrunde, eine Elektrolysezelle vorzuschlagen, die es erlaubt, den Platzbedarf und die Herstellungskosten zu reduzieren und gleichzeitig die Streuströme und damit die Betriebskosten zu verringern sowie eine Serienschaltung von Zellen ermöglicht.

Gelöst wird diese Aufgabe erfindungsgemäß durch eine eingangs genannte gattungsgemäße Elektrolysezelle, wobei die Elektrolysezelle zur Durchführung einer Wasserelektrolyse geeignet ist und in einer ersten der beiden Halbzellen mindestens ein Einlass für Elektrolyt und in der zweiten Halbzelle zumindest ein Auslass für Elektrolyt und kein Einlass für Elektrolyt vorgesehen ist, so dass über den mindestens einen Einlass zugeführter Elektrolyt nach Durchtreten des Separators über den mindestens einen Auslass abführbar ist.

Ferner wird die Aufgabe verfahrenstechnisch erfindungsgemäß durch ein eingangs genanntes gattungsgemäße Verfahren gelöst, die Elektrolysezelle eine erfindungsgemäße Elektrolysezelle ist, welches Verfahren die folgenden Schritte umfasst:
- Anschließen des mindestens einen Elektrolyteinlasses und des mindestens einen Elektrolytauslasses an einen Elektrolytkreislauf, der über den permeablen Separator geschlossen ist, und Füllen der beiden Halbzellen mit Elektrolyt,
- Starten eines Elektrolysevorgangs durch Schließen eines elektrischen Stromkreises über Kathode und Anode der Elektrolysezelle sowie einer externen Stromquelle,
- Abführen von in den Halbzellen entstehendem Produktgas, während des Elektrolysevorgangs,
- Beaufschlagen der ersten Halbzellen mit einem Überdruck verglichen mit der zweiten Halbzelle während des Elektrolysevorgangs, um das Durchtreten des Elektrolyten durch den Separator zu fördern.

Eine solche Elektrolysezelle weist eine Kathodenhalbzelle mit einer Kathode und eine Anodenhalbzelle mit einer Anode auf. Beide Halbzellen sind mit einem Separator voneinander getrennt, welcher für einen im Betriebszustand in den Halbzellen befindlichen Elektrolyten permeabel ausgebildet ist und zur Trennung der bei der Elektrolyse entstehenden Gase, welche bei der Wasserelektrolyse zu einer unerwünschten Knallgasexplosion führen könnte, vorgesehen ist. Das besondere Kennzeichen dieser Elektrolysezelle besteht darin, dass in einer ersten der beiden Halbzellen mindestens ein Einlass für Elektrolyt - als Einlass im Sinne der Erfindung ist eine Zuführung unverbrauchten, also aufbereiteten Elektrolyts zu verstehen - und in der zweiten Halbzelle zumindest ein Auslass für (verbrauchten) Elektrolyt und kein Einlass für Elektrolyt vorgesehen ist. So wird über den mindestens einen Einlass zugeführter Elektrolyt nach Durchtreten des Separators über den mindestens einen Auslass abführbar. Auf vorteilhafte Art und Weise wird hierdurch nicht nur ein erheblicher Aufwand für die Peripherie, wie Rohrleitungen, Vorratsbehälter, Pumpen und Instrumente, vermieden, sondern hat sich überraschenderweise herausgestellt, dass durch diese Maßnahme Streuströme erheblich gesenkt werden können. Dieses resultiert nicht nur in einer höheren Effizienz und damit Wirtschaftlichkeit der jeweiligen Elektrolysezelle, sondern erhöht auch die Lebensdauer derselben, da unerwünschte Korrosionsprozesse und Sekundärreaktionen signifikant verringert werden können.

Der Einlass für Elektrolyt ist in der Kathodenhalbzelle und der Auslass für Elektrolyt ist in der Anodenhalbzelle vorgesehen. Eine solche Konfiguration hat bei der Wasserelektrolyse den Vorteil, dass die Produktreinheit des in der Kathodenhalbzelle entstehenden Wasserstoffs verbessert ist. Durch die Strömung des Elektrolyten durch den Separator kommt es in einem gewissen Maße zu einem Mitschleppen von im Elektrolyten gelöster Produktgase. Ist der Elektrolytstrom von der Kathodenhalbzelle zur Anodenhalbzelle gerichtet, gelangt nur bedingt im Elektrolyt gelöster Sauerstoff durch den Separator in die Kathodenhalbzelle. Vor einem erneuten Eintritt in die Kathodenhalbzelle können die im Elektrolyt gelösten Produktgase im Rahmen der Elektrolytaufbereitung entfernt werden.

In bevorzugten Ausführungsformen ist der Separator hydrophil ausgebildet. Durch die hydrophile Ausbildung des Separators werden die Kapillarkräfte verstärkt, die zu einer vollständigen Benetzung des Separators mit Elektrolyt führen. Durch die Benetzung des Separators mit Elektrolyt werden die Poren des Separators auch in dem über dem Elektrolytspiegel in der Zelle vorhandenen Gasraum verschlossen, so dass keine Produktgase durch den Separator treten können. Die hydrophile Ausbildung des Separators sorgt zugleich für eine Erhöhung des Öffnungsdrucks der Poren (d.h. des Gasdrucks, bei dem sich die Poren wieder öffnen) und für eine verbesserte Durchlässigkeit des Separators für Elektrolyt.

Bevorzugt weist der Separator bei einem Druckunterschied der beiden Halbzellen von bis zu 500 mbar eine Permeabilität im Bereich von 17 bis 175 Liter Elektrolyt pro Stunde und Quadratmeter aktiver Separatorfläche auf. Mit einer Durchflussmenge in diesem Bereich kann erreicht werden, dass eine ausreichende Elektrolytversorgung der Zelle gewährleistet ist und zugleich auch die entstehende Reaktionswärme über den Elektrolyten aus der Zelle abgeführt werden kann.

In einer bevorzugten Weiterbildung der erfindungsgemäßen Elektrolysezelle ist in der ersten und/oder in der zweiten Halbzelle ein Gasabscheider zur Abscheidung eines Produktgases vom Elektrolyten angeordnet. Dieser Gasabscheider ist dabei an eine Elektrolytrückführung angeschlossen, mittels derer in den Gasabscheider eingetretener Elektrolyt in die jeweilige Halbzelle zurückführbar ist. Der Eintritt von Elektrolyt in den Gasabscheider geschieht vornehmlich durch die bei der Elektrolyse entstehenden Produktgase, die Elektrolyt als Tröpfchenströmung mitschleppen, welcher Elektrolyt durch Rückführung aus dem Gasabscheider, in dem der Elektrolyt von dem erzeugten Produktgas getrennt wird, zurückzugewinnen ist.

Gemäß einer besonders bevorzugten Ausführungsform der Erfindung ist diese Rückführung halbzellenintern oder halbzellenextern verlaufend ausgeführt. Während bei einer halbzelleninternen Rückführung der in dem Gasabscheider zurückgewonnene Elektrolyt durch eine Leitung innerhalb der Halbzelle zurück zum Elektrolytreservoir geleitet wird, zeichnet sich eine halbzellenexterne Rückführung dadurch aus, dass der Elektrolyt durch eine Rohrleitung zunächst aus der Halbzelle beziehungsweise dem Gasabscheider austritt und im Anschluss entweder an den bereits vorhandenen Elektrolyteinlass angekoppelt wird oder einen zweiten Elektrolyteinlass für die erste Halbzeile bildet. Besonders bevorzugt bezüglich der Einsparung von Platzbedarf ist eine halbzelleninterne Rückführung, während die halbzellenexterne Rückführung den Vorteil der geringeren Beeinflussung der Prozesse innerhalb der Halbzelle, beispielsweise des Produktgasaufstiegs, aufweist.

Die erfindungsgemäße Elektrolysezelle ist zur Durchführung einer alkalischen Wasserelektrolyse geeignet. In einer solchen Konfiguration konnte eine besondere Absenkung der Streuströme beobachtet werden, was in Anbetracht der zunehmenden Bedeutung der Wasserelektrolyse besonders vorteilhaft ist.

Praktischerweise sind die erfindungsgemäßen Elektrolysezellen zu einer Vielzahl elektrisch in Reihe und in einem Elektrolytkreislauf hydraulisch parallel geschalteter Elektrolysezellen in einem Elektrolyseur zusammengefasst, so dass eine wirtschaftlich relevante Menge an Produktgasen erzeugt werden kann.

Der Elektrolyseur umfasst vorzugsweise nur einen Elektrolytkreislauf für die Versorgung der Kathodenhalbzellen und der Anodenhalbzellen mit Elektrolyt. Dabei erfolgt die Versorgung der Anodenhalbzellen mit Elektrolyt durch den Separator hindurch. Der Elektrolytkreislauf ist also durch den Separator hindurch geschlossen.

Der Elektrolyseur umfasst ferner bevorzugt Mittel zum Erzeugen eines Überdrucks, durch die die Kathodenhalbzellen im Verhältnis zu den Anodenhalbzellen mit einem Überdruck beaufschlagbar sind. Durch einen Überdruck in der Kathodenhalbzelle kann ein Durchtritt von anodenseitig entstehenden Produktgasen durch den Separator zusätzlich reduziert und der Durchtritt von Elektrolyt in der Gegenrichtung gefördert werden.

Zusätzlich betrifft die Erfindung ein Verfahren zum Betrieb einer erfindungsgemäßen Elektrolysezelle, umfassend die folgenden Schritte:
- Anschließen des mindestens einen Elektrolyteinlasses und des mindestens einen Elektrolytauslasses an einen Elektrolytkreislauf, der über den permeablen Separator geschlossen ist, und Füllen der beiden Halbzellen mit Elektrolyt,
- Starten eines Elektrolysevorgangs durch Schließen eines elektrischen Stromkreises über Kathode und Anode der Elektrolysezelle, sowie einer externen Stromquelle,
- Abführen von in den Halbzellen entstehendem Produktgas, während des Elektrolysevorgangs,
- Beaufschlagen der ersten Halbzellen mit einem Überdruck verglichen mit der zweiten Halbzelle während des Elektrolysevorgangs, um das Durchtreten des Elektrolyten durch den Separator zu fördern.

Dabei hat sich als besonders vorteilhaft erwiesen, wenn in der einen Halbzelle, bei der Wasserelektrolyse bevorzugt die Kathodenhalbzelle, ein Überdruck bezüglich der anderen Halbzelle vorherrscht. Hierdurch wird das Durchtreten des Elektrolyten durch den Separator gefördert, so dass die Elektrolyse mit einem höheren Durchsatz durchgeführt werden kann.

In einer besonders bevorzugten Weiterbildung des erfindungsgemäßen Verfahrens wird der in den oder die Gasabscheider eingetretene Elektrolyt in die jeweilige Halbzelle zurückgeführt, so dass hierdurch der Elektrolytverbrauch in nicht unerheblicher Weise abgesenkt werden kann.

Vorteilhafte Weiterbildungen ergeben sich aus den Unteransprüchen, der nachfolgenden Beschreibung sowie den Figuren.

Nachfolgend ist die Erfindung anhand von Ausführungsbeispielen unter Bezugnahme auf die beigefügten Figuren beschrieben. Es zeigt:
Fig. 1: Eine schematische Darstellung einer vorbekannten Elektrolysezelle mit einem Elektrolytein- und Auslass je Halbzelle und einem permeablen Separator,
Fig. 2: eine schematische Darstellung einer erfindungsgemäßen Elektrolysezelle mit einem Elektrolytein- und Auslass je Elektrolysezelle und einem für den Elektrolyten permeablen Separator,
Fig. 3: eine schematische Darstellung einer erfindungsgemäßen Elektrolysezelle mit einer internen Rückführung des in dem Gasabscheider zurückgewonnenen Elektrolyten und
Fig. 4: eine schematische Darstellung einer erfindungsgemäßen Elektrolysezelle mit einer externen Rückführung des in dem Gasabscheider zurückgewonnenen Elektrolyten,
Fig. 5: eine schematische Darstellung eines erfindungsgemäßen Elektrolyseurs mit einer Vielzahl von erfindungsgemäßen Elektrolysezellen, die in einem Elektrolytkreislauf hydraulisch parallel geschaltet sind.

In den verschiedenen Figuren sind gleiche Teile stets mit den gleichen Bezugszeichen versehen und werden daher in der Regel auch jeweils nur einmal benannt beziehungsweise erwähnt.

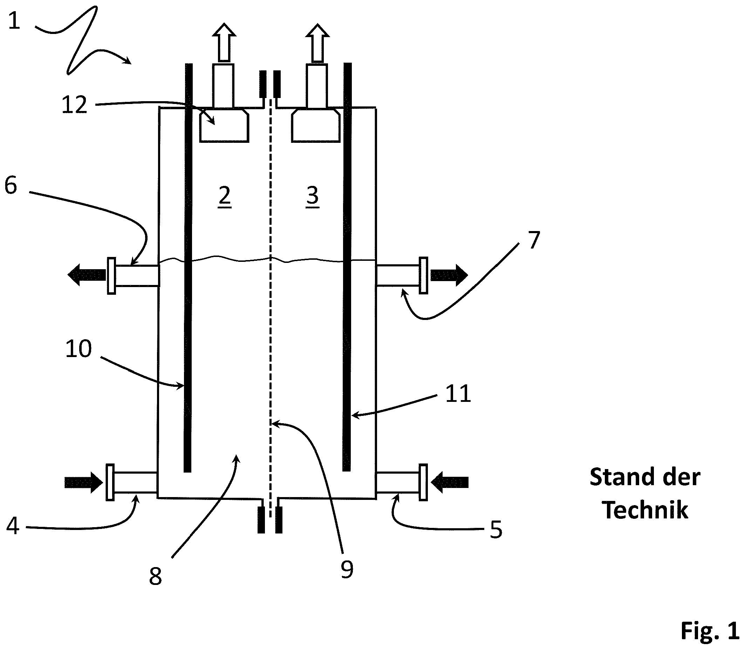

In Fig. 1 ist eine klassische Elektrolysezelle gezeigt, die über einen Anolyt- und einen Katholytkreislauf verfügt, also je Halbzelle einen Ein- und Auslass aufweist. Der permeable Separator trennt die beiden Halbzellen voneinander, wobei dieser permeabel für Ionen ist, um den Stromkreis zu schließen. Im Rahmen der Elektrolyse steigen Produktgase auf und schleppen Tröpfchen des Elektrolyten mit, wobei in den Gasabscheidern eine Trennung der jeweiligen Elektrolyten von den jeweiligen Produktgasen erfolgt.

Eine in Fig. 1 gezeigt Elektrolysezelle 1 weist zwei Elektrolytkreisläufe - je Halbzelle 2, 3 einen - mit insgesamt vier Rohrleitungen für Einlässe 4, 5 beziehungsweise Auslässe 6, 7 für aufbereiteten beziehungsweise verbrauchten Elektrolyten 8 auf. Dieses resultiert in einem hohen Maß an verfahrenstechnischem Aufwand, insbesondere der Installation von Rohrleitungen. Hierdurch werden nicht nur die Herstellungskosten und die Komplexität der Anlage in die Höhe getrieben, sondern verursacht die Vielzahl der Rohrleitungen auch ein hohes Maß an die Effizienz der Elektrolysezelle herabsetzenden Streuströmen, welche zudem zu unerwünschter Korrosion führen.

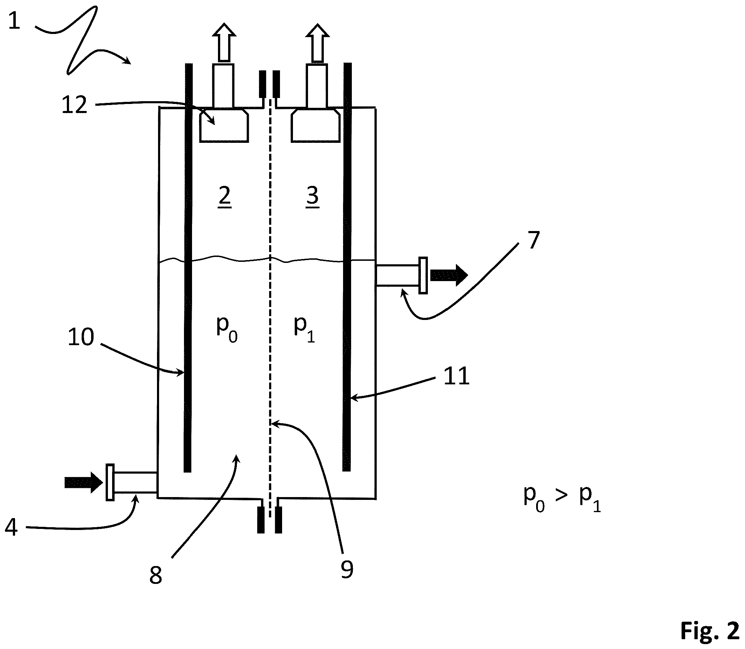

Eine in Fig. 2 dargestellte bevorzugte Ausführungsform der erfindungsgemäßen Elektrolysezelle 1 umfasst einen für Elektrolyt 8 durchlässigen Separator 9, sowie in der ersten der beiden Halbzellen 2 neben einer Elektrode 10 einen Einlass für Elektrolyt 4 und in der zweiten Halbzelle 3 neben einer Elektrode 11 zumindest einen Auslass 7 für Elektrolyt 8 und keinen Einlass für Elektrolyt 8. Damit wird über den einen Einlass 4 zugeführter Elektrolyt 8 nach Durchtreten des Separators 9 über den mindestens einen Auslass 7 abführbar. Damit ist bezüglich der vorbekannten Elektrolysezelle 1 die Funktion des Auslasses 6 der einen Halbzelle 2 und die Funktion des Einlasses 5 der anderen Halbzelle 3 durch den für Elektrolyt 8 durchlässigen Separator 9 übernommen worden. Hierdurch wird nicht nur die Anzahl der Elektrolytkreisläufe beziehungsweise der erforderlichen Rohrleitungen signifikant abgesenkt, sondern wird damit eine Verringerung der Streuströme erreicht. Dies wiederum führt vorteilhafterweise zu einer Verringerung von Sekundärreaktionen und Korrosion.

Bei der in Fig. 2 dargestellten erfindungsgemäßen Elektrolysezelle 1 wird die erste Halbzelle 2 mit einem Überdruck verglichen mit der zweiten Halbzelle während des Elektrolysevorgangs beaufschlagt, um das Durchtreten des Elektrolyten 8 durch den Separator 9 zu fördern. Hierdurch wird der Durchsatz der Elektrolysezelle 1 signifikant bezüglich einer nicht durch die Druckverhältnisse in den Halbzellen 2, 3 angetriebenen Durchströmung des Separators 9 mit Elektrolyt 8 angehoben. Zudem ist durch den für Elektrolyt 8 permeablen Separator 9 eine Separierung der unterschiedlichen Produktgase garantiert, was beispielsweise bei der Wasserelektrolyse zur Vermeidung einer Knallgasreaktion erforderlich ist.

Die erste Halbzelle 2 bildet die Kathodenhalbzelle und die zweite Halbzelle 3 die Anodenhalbzelle, so dass der Einlass 4 für Elektrolyt 8 in der Kathodenhalbzelle 2 und der Auslass 7 für Elektrolyt 8 in der Anodenhalbzelle 3 vorgesehen ist.

Der Separator 9 ist bevorzugt hydrophil ausgebildet. Der Separator kann beispielsweise aus Zirkoniumoxid gebildet sein. Der Separator 9 weist bevorzugt bei einem Druckunterschied der beiden Halbzellen 2, 3 von bis zu 500 mbar eine Permeabilität im Bereich von 17 bis 175 Liter Elektrolyt 8 pro Stunde und Quadratmeter aktiver Separatorfläche auf.

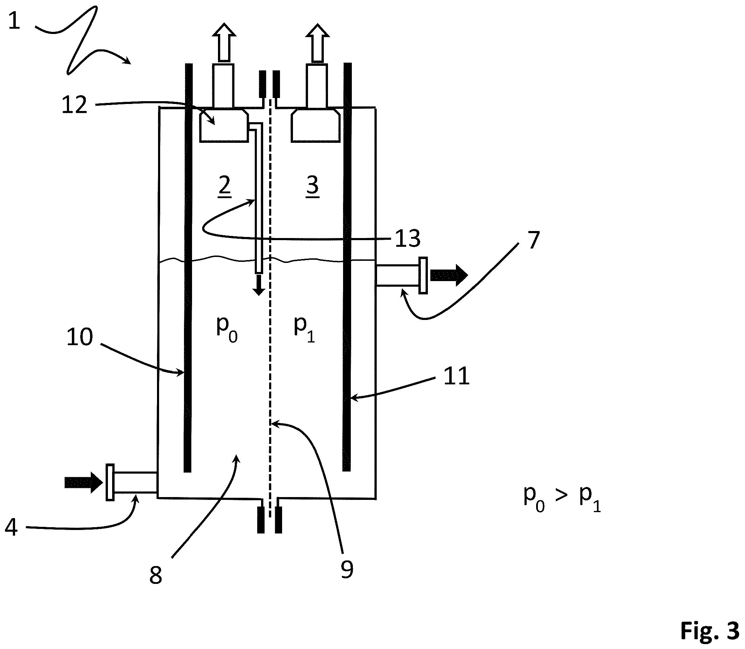

Gemäß einer in Fig. 3 dargestellten Weiterbildung der erfindungsgemäßen Elektrolysezelle 1 erfolgt in einem Gasabscheider 12 der ersten Halbzelle 2 eine Trennung von Produktgas und Elektrolyt 7, wobei der zurückgewonnene Elektrolyt 8 durch eine interne Rückführungsleitung 13 in das Elektrolytreservoir zurückgeführt wird. Dabei können im Rahmen der erfindungsgemäßen Elektrolysezelle der oder die Gasabscheider alternativ auch in Funktionseinheit mit dem Elektrolytauslass ausgeführt sein. Durch die Rückführung des Elektrolyten 8 kann der Elektrolytverbrauch signifikant reduziert werden, so dass auch hierdurch die Betriebskosten reduziert werden können. Der Vorteil der internen Rückführung liegt in einem kompakten, platzsparenden Aufbau.

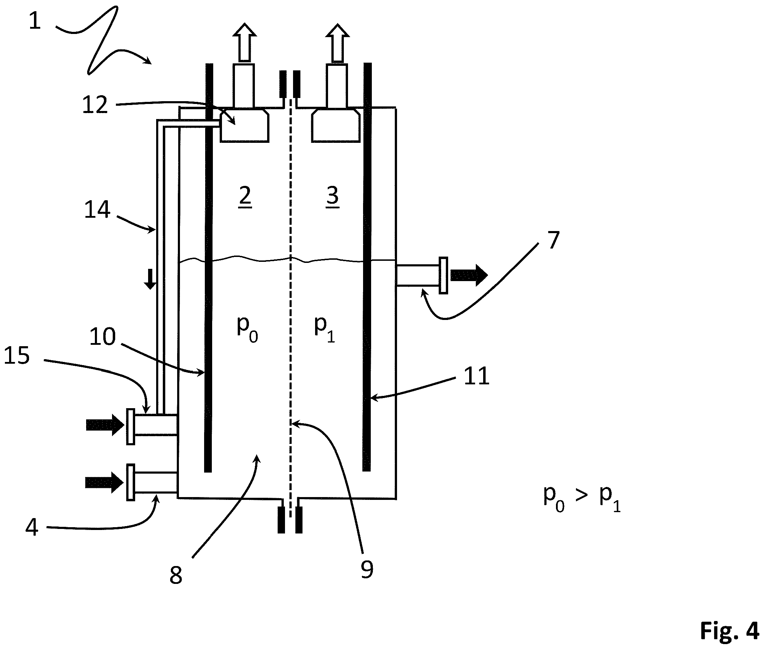

Fig. 4 zeigt eine bezüglich Fig. 3 alternative Weiterbildung der erfindungsgemäßen Elektrolysezelle 1, bei der die Rückführung des in dem Gasabscheider 12 gewonnenen Elektrolyten 7 als externe Rückführung mit einer externen Rückführungsleitung 14 und einem zweiten Einlass 15 ausgeführt ist. Durch eine solche Ausgestaltung der Rückführung wird der Produktgasaufstieg nicht beeinträchtigt. Ebenfalls kann dabei die Rückführungsleitung 14 direkt an den Einlass 4 angeschlossen sein, wodurch die Anzahl der benötigten Einlässe auf eins beschränkt ist.

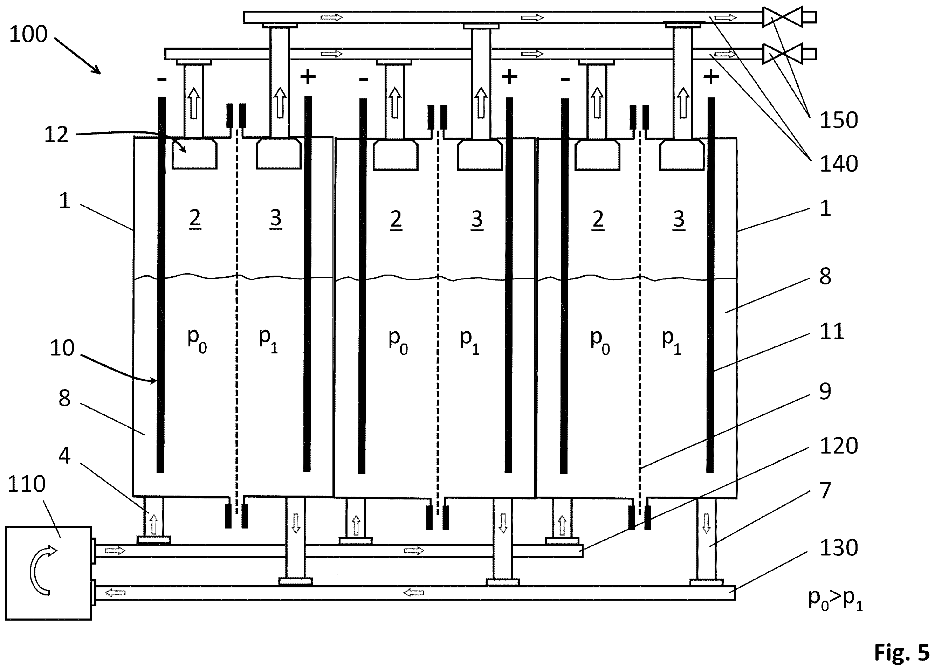

In Fig. 5 ist ein Elektrolyseur mit einer Vielzahl in einem Elektrolytkreislauf hydraulisch parallel geschalteter Elektrolysezellen 1 gemäß dem Ausführungsbeispiel in Fig. 2 gezeigt. Die Elektrolysezellen 1 sind elektrisch in Reihe geschaltet (nicht dargestellt).

Der in Fig. 5 dargestellte Elektrolyseur 100 weist nur einen Elektrolytkreislauf für die Versorgung der Kathodenhalbzellen 2 und der Anodenhalbzellen 3 mit Elektrolyt 8 auf. Die Versorgung der Anodenhalbzellen 3 mit Elektrolyt 8 erfolgt dabei durch durch den Separator 9 hindurchtretenden Elektrolyt 8. Besonders bevorzugt ist der Elektrolytkreislauf so ausgebildet, dass der gesamte umlaufende Elektrolyt 8 durch die Separatoren 9 des Elektrolyseurs 100 geleitet wird.

Ausgehend von einer Elektrolytaufbereitungseinrichtung 110 wird der Elektrolyt 8 über einen Zulaufverteiler 120 den jeweiligen Kathodenhalbzellen 2 hydraulisch parallel zugeführt. Innerhalb der Elektrolysezellen 1 tritt der Elektrolyt 8 durch den Separator 9 zur Versorgung der Anodenhalbzellen 3 mit Elektrolyt 8. Der Elektrolyt 8 verlässt die Anodenhalbzellen 3 über den Auslass 7 und wird über einen Rücklaufsammler 130 zur Elektrolytaufbereitungseinrichtung 110 zurückgeführt.

Der Elektrolyseur 100 umfasst ferner Mittel zum Erzeugen eines Überdrucks 150, durch die die Kathodenhalbzellen 2 im Verhältnis zu den Anodenhalbzellen 3 mit einem Überdruck beaufschlagbar sind. In dem in Fig. 5 gezeigten Beispiel sind die Mittel zum Erzeugen eines Überdrucks 150 durch einstellbare Druckregelventile in den Gasableitungen 140 für die Produktgase gebildet. Hierdurch lassen sich die Drücke p0 und p1 in den Kathodenhalbzellen 2 bzw. den Anodenhalbzellen 3 getrennt voneinander einstellen, um ein gewünschtes Druckgefälle zu erreichen. Prinzipiell ist es auch möglich, nur in der Gasableitung der Kathodenhalbzellen 2 ein Druckregelventil vorzusehen und die Anodenhalbzellen 3 bei Umgebungsdruck zu betreiben. Bevorzugt wird zwischen den Kathodenhalbzellen 2 und den Anodenhalbzellen 3 ein Druckunterschied von weniger als 500 mbar, besonders bevorzugt weniger als 100 mbar eingestellt.

Auch die in den Fig. 3 oder 4 gezeigten Elektrolysezellen 1 können in analoger Weise zu Fig. 5 zu einem Elektrolyseur zusammengeschaltet werden. Für die Elektrolysezellen 1 des Elektrolyseurs 100 gelten daher sämtliche Ausführungen zu den Fig. 2 bis 4 entsprechend.

## Patentansprüche

1. Elektrolysezelle, umfassend eine Kathodenhalbzelle (2) mit einer Kathode (10), eine Anodenhalbzelle (3) mit einer Anode (11), und einen die beiden Halbzellen (2, 3) voneinander trennenden Separator (9), der für einen im Betriebszustand in den Halbzellen (2, 3) befindlichen Elektrolyten (8) permeabel ausgebildet ist, wobei in einer ersten (2) der beiden Halbzellen (2, 3) mindestens ein Einlass (4) für Elektrolyt (8) und in der zweiten Halbzelle (3) zumindest ein Auslass (7) für Elektrolyt (8) und kein Einlass für Elektrolyt (8) vorgesehen ist, so dass über den mindestens einen Einlass (4) zugeführter Elektrolyt (8) nach Durchtreten des Separators (9) über den mindestens einen Auslass (7) abführbar ist, **dadurch gekennzeichnet, dass** die Elektrolysezelle (1) zur Durchführung einer alkalischen Wasserelektrolyse geeignet ist und der Einlass (4) für Elektrolyt (8) in der Kathodenhalbzelle (2) und der Auslass (7) für Elektrolyt (8) in der Anodenhalbzelle (3) vorgesehen ist.

2. Elektrolysezelle nach Anspruch 1, **dadurch gekennzeichnet, dass** in der ersten (2) und/oder in der zweiten (3) Halbzelle ein Gasabscheider (12) zur Abscheidung eines Produktgases vom Elektrolyten (8) angeordnet ist und der Gasabscheider (12) an eine Elektrolytrückführung (13, 14) angeschlossen ist, mittels derer in den Gasabscheider (12) eingetretener Elektrolyt (8) in die jeweilige Halbzelle (2) zurückführbar ist.

3. Elektrolysezelle nach Anspruch 2, **dadurch gekennzeichnet, dass** die Rückführung halbzellenintern verläuft.

4. Elektrolyseur mit einer Vielzahl elektrisch in Reihe und in einem Elektrolytkreislauf hydraulisch parallel geschalteter Elektrolysezellen (1), **dadurch gekennzeichnet, dass** die Elektrolysezellen (1) nach einem der Ansprüche 1 bis 3 ausgeführt sind.

5. Elektrolyseur nach Anspruch 4, **dadurch gekennzeichnet, dass** der Elektrolyseur (100) nur einen Elektrolytkreislauf für die Versorgung der Kathodenhalbzellen (2) und der Anodenhalbzellen (3) mit Elektrolyt (8) umfasst, wobei die Versorgung der Anodenhalbzellen (3) mit Elektrolyt (8) durch den Separator (9) hindurch erfolgt.

6. Elektrolyseur nach Anspruch 4 oder 5, **dadurch gekennzeichnet, dass** der Elektrolyseur (100) Mittel zum Erzeugen eines Überdrucks (150) umfasst, durch die die Kathodenhalbzellen (2) im Verhältnis zu den Anodenhalbzellen (3) mit einem Überdruck beaufschlagbar sind.

7. Verfahren zum Betrieb einer Elektrolysezelle, **dadurch gekennzeichnet, dass** die Elektrolysezelle (1) nach einem der Ansprüche 1 bis 3 ausgebildet ist, umfassend die folgenden Schritte:
- Anschließen des mindestens einen Elektrolyteinlasses (4) und des mindestens einen Elektrolytauslasses (7) an einen Elektrolytkreislauf, der über den permeablen Separator (9) geschlossen ist, und Füllen der beiden Halbzellen (2, 3) mit Elektrolyt (8),
- Starten eines Elektrolysevorgangs durch Schließen eines elektrischen Stromkreises über Kathode (10) und Anode (11) der Elektrolysezelle (1) sowie einer externen Stromquelle,
- Abführen von in den Halbzellen (2, 3) entstehendem Produktgas, während des Elektrolysevorgangs,
- Beaufschlagen der ersten Halbzellen (2) mit einem Überdruck verglichen mit der zweiten Halbzelle (3) während des Elektrolysevorgangs, um das Durchtreten des Elektrolyten (8) durch den Separator (9) zu fördern.

8. Verfahren nach Anspruch 7 mit einer Elektrolysezelle nach Anspruch 2 oder 3, **dadurch gekennzeichnet, dass** der in den oder die Gasabscheider (12) eingetretene Elektrolyt (8) in die jeweilige Halbzelle (2) zurückgeführt wird.

## Claims

1. An electrolytic cell comprising a cathode half-cell (2) having a cathode (10), an anode half-cell (3) having an anode (11), and a separator (9) which separates the two half-cells (2, 3) from one another and which is permeable to an electrolyte (8) present in the half-cells (2, 3) during operation, wherein at least one inlet (4) for electrolyte (8) is provided in a first half-cell (2) of the two half-cells (2, 3) and at least one outlet (7) for electrolyte (8) and no inlet for electrolyte (8) are provided in the second half-cell (3), so that electrolyte (8) supplied via the at least one inlet (4) is dischargeable via the at least one outlet (7) after passing through the separator (9), **characterized in that** the electrolytic cell (1) is suitable for carrying out alkaline water electrolysis and the inlet (4) for electrolyte (8) is provided in the cathode half-cell (2) and the outlet (7) for electrolyte (8) is provided in the anode half-cell (3).

2. The electrolytic cell as claimed in claim 1, **characterized in that** a gas separator (12) for separating a product gas from the electrolyte (8) is arranged in the first (2) and/or in the second (3) half-cell, and the gas separator (12) is connected to an electrolyte return (13, 14), by means of which electrolyte (8) which has entered the gas separator (12) is returnable to the respective half-cell (2).

3. The electrolytic cell as claimed in claim 2, **characterized in that** the return runs inside the half-cell.

4. An electrolyzer having a multiplicity of electrolytic cells (1) which are electrically connected in series and hydraulically connected in parallel in an electrolyte circuit, **characterized in that** the electrolytic cells (1) are realized as claimed in any of claims 1 to 3.

5. The electrolyzer as claimed in claim 4, **characterized in that** the electrolyzer (100) comprises only one electrolyte circuit for supplying electrolyte (8) to the cathode half-cells (2) and the anode half-cells (3), wherein electrolyte (8) is supplied to the anode half-cells (3) through the separator (9).

6. The electrolyzer as claimed in claim 4 or 5, **characterized in that** the electrolyzer (100) comprises means for generating a positive pressure (150), by means of which a positive pressure is appliable to the cathode half-cells (2) in relation to the anode half-cells (3).

7. A method for operating an electrolytic cell, **characterized in that** the electrolytic cell (1) is designed as claimed in any of claims 1 to 3, comprising the following steps:
- connecting the at least one electrolyte inlet (4) and the at least one electrolyte outlet (7) to an electrolyte circuit which is closed via the permeable separator (9), and filling the two half-cells (2, 3) with electrolyte (8),
- starting an electrolysis process by closing an electrical circuit via the cathode (10) and anode (11) of the electrolytic cell (1) and an external power source,
- discharging, during the electrolysis process, product gas formed in the half-cells (2, 3),
- applying to the first half-cells (2), during the electrolysis process, a positive pressure compared to the second half-cell (3) in order to promote the passage of the electrolyte (8) through the separator (9).

8. The method as claimed in claim 7 with an electrolytic cell as claimed in claim 2 or 3, **characterized in that** the electrolyte (8) which has entered the gas separator(s) (12) is returned to the respective half-cell (2).

## Revendications

1. Cellule électrolytique comprenant une demi-cellule cathodique (2) avec une cathode (10), une demi-cellule anodique (3) avec une anode (11), et un séparateur (9) qui sépare les deux demi-cellules (2, 3) l'une de l'autre et qui est perméable à un électrolyte (8) présent dans les demi-cellules (2, 3) pendant le fonctionnement, dans lequel au moins une entrée (4) pour l'électrolyte (8) est prévue dans une première demi-cellule (2) des deux demi-cellules (2, 3) et au moins une sortie (7) pour l'électrolyte (8) et aucune entrée pour l'électrolyte (8) sont prévues dans la deuxième demi-cellule (3), de sorte que l'électrolyte (8) fourni par au moins une entrée (4) puisse être déchargé par au moins une sortie (7) après avoir traversé le séparateur (9), **caractérisé en ce que** la cellule d'électrolyse (1) est apte à effectuer l'électrolyse de l'eau alcaline et que l'entrée (4) pour l'électrolyte (8) est prévue dans la demi-cellule cathodique (2) et la sortie (7) pour l'électrolyte (8) est prévue dans la demi-cellule anodique (3).

2. Cellule d'électrolyse selon la revendication 1, **caractérisée en ce qu'**un séparateur de gaz (12) pour séparer un gaz produit de l'électrolyte (8) est disposé dans la première (2) et/ou dans la deuxième (3) demi-cellule, et le séparateur de gaz (12) est relié à un retour d'électrolyte (13, 14), au moyen duquel l'électrolyte (8) qui a pénétré dans le séparateur de gaz (12) peut être renvoyé dans la demi-cellule respective (2).

3. Cellule d'électrolyse selon la revendication 2, **caractérisée par le fait que** le retour s'effectue à l'intérieur de la demi-cellule.

4. Electrolyseur comportant une multiplicité de cellules électrolytiques (1) connectées électriquement en série et hydrauliquement en parallèle dans un circuit d'électrolyte, **caractérisé en ce que** les cellules électrolytiques (1) sont réalisées selon l'une des revendications 1 à 3.

5. Électrolyseur selon la revendication 4, **caractérisé en ce que** l'électrolyseur (100) ne comprend qu'un seul circuit d'électrolyte pour alimenter en électrolyte (8) les demi-cellules cathodiques (2) et les demi-cellules anodiques (3), l'électrolyte (8) étant fourni aux demi-cellules anodiques (3) par l'intermédiaire du séparateur (9).

6. Électrolyseur selon la revendication 4 ou 5, **caractérisé en ce que** l'électrolyseur (100) comprend des moyens pour générer une pression positive (150), au moyen de laquelle une pression positive est applicable aux demi-cellules de la cathode (2) par rapport aux demi-cellules de l'anode (3).

7. Procédé de fonctionnement d'une cellule d'électrolyse, **caractérisé en ce que** la cellule d'électrolyse (1) est conçue selon l'une quelconque des revendications 1 à 3, comprenant les étapes suivantes :
- connecter la au moins une entrée d'électrolyte (4) et la au moins une sortie d'électrolyte (7) à un circuit d'électrolyte fermé par le séparateur perméable (9), et remplir les deux demi-cellules (2, 3) avec de l'électrolyte (8),
- démarrer un processus d'électrolyse en fermant un circuit électrique via la cathode (10) et l'anode (11) de la cellule d'électrolyse (1) et une source d'énergie externe,
- décharger, au cours du processus d'électrolyse, le gaz produit formé dans les demi-cellules (2, 3),
- appliquer aux premières demi-cellules (2), pendant le processus d'électrolyse, une pression positive par rapport à la deuxième demi-cellule (3) afin de favoriser le passage de l'électrolyte (8) à travers le séparateur (9).

8. Procédé selon la revendication 7 avec une cellule d'électrolyse selon la revendication 2 ou 3, **caractérisé en ce que** l'électrolyte (8) qui a pénétré dans le séparateur ou les séparateurs de gaz (12) est renvoyé dans la demi-cellule (2) respective.
